# EUROPEAN PATENT APPLICATION

(11) **EP 4 779 828 A1**
(43) Date of publication of application: **22.07.2026**
(21) Application number: 24863998.1
(22) Date of filing: 29.02.2024
(51) Int. Cl.: H02H 7/12, H02H 3/087

(54) **POWER-CONVERTER PROTECTION APPARATUS AND POWER CONVERSION SYSTEM**

(30) Priority: 11.09.2023 CN 202322464710 U
(71) Applicant: Sungrow Power Supply Co., Ltd., Hefei, Anhui 230088 (CN)
(72) Inventor: DENG, Kai, Hefei, Anhui 230088 (CN); CHEN, Peng, Hefei, Anhui 230088 (CN); SHEN, Zhi, Hefei, Anhui 230088 (CN); LI, Le, Hefei, Anhui 230088 (CN)
(74) Representative: Zacco Norway AS
(86) International application number: PCT/CN2024/079218
(87) International publication number: WO 2025/055271

(57) **Abstract**

Provided in the embodiments of the present utility model are a power-converter protection apparatus and a power conversion system. The power-converter protection apparatus comprises a protection element and a mechanical switch, wherein the protection element is connected to the mechanical switch; a control end of the protection element and a control end of the mechanical switch respectively receive corresponding control signals; when a power converter is overloaded, the control signal received by the mechanical switch is a turn-off signal, such that load switching and arc extinguishing inside the power converter are realized; and when the power converter short circuits, the control signal received by the protection element is a turn-off signal, such that the power converter is disconnected from a direct-current power source. The present utility model can ensure the safety of a power conversion system when a power converter is faulty.

## Description

This application claims the priority to Chinese Patent Application No. 202322464710.7, titled "POWER-CONVERTER PROTECTION APPARATUS AND POWER CONVERSION SYSTEM", filed on September 11, 2023 with the China National Intellectual Property Administration, which is incorporated herein by reference in its entirety.

### FIELD

The present disclosure relates to the technical field of power electronics, and in particular to an apparatus for protecting a power converter and a power conversion system.

### BACKGROUND

At present, in response to a short-circuit fault occurring in a power converter, cutting off a short-circuit fault current may lead to a risk of arcing, which may burn out the entire power converter in severe cases and even affect the safety of the entire power conversion system. Additionally, in response to the short-circuit fault occurring in the power converter, a relatively long protection action time may pose a certain safety risk to the power conversion system.

### SUMMARY

The objective of embodiments of the present disclosure is to provide an apparatus for protecting a power converter and a power conversion system, to ensure the safety of the power conversion system in response to a fault occurring in the power converter. The specific technical solutions are as follows.

An apparatus for protecting a power converter is provided according to the present disclosure. The apparatus includes a protection component and a mechanical switch.

The protection component is connected to the mechanical switch.

A control terminal of the protection component and a control terminal of the mechanical switch receive respective control signals.

In response to the power converter being overloaded, a control signal received by the mechanical switch is a turn-off signal to implement on-load disconnection and arc extinguishing inside the power converter.

In response to the power converter being short-circuited, a control signal received by the protection component is a turn-off signal to disconnect a connection between the power converter and a direct-current power supply.

In an embodiment, the protection component is in a quantity of one or two.

In response to the protection component being in a quantity of one, the protection component is connected in series with a positive terminal or a negative terminal of the direct-current power supply.

In response to the protection component being in a quantity of two, the two protection components are connected in series with the positive terminal and the negative terminal of the direct-current power supply respectively, or a branch formed by the two protection components connected in series is connected in series with the positive terminal or the negative terminal of the direct-current power supply.

In an embodiment, the mechanical switch is in a quantity of two, and the two mechanical switches are connected to a positive terminal and a negative terminal of a direct-current side of the power converter respectively.

In an embodiment, the protection component is a solid-state switch.

In an embodiment, the solid-state switch includes an insulated gate bipolar transistor, IGBT, or a metal-oxide-semiconductor, MOS, transistor.

In an embodiment, the mechanical switch includes a circuit breaker.

In an embodiment, the apparatus for protecting the power converter further includes a controller.

The protection component and the mechanical switch are controlled by the controller.

An input terminal of the controller receives a sampling signal, and an output terminal of the controller is connected to the control terminal of the protection component and the control terminal of the mechanical switch.

In an embodiment, the apparatus for protecting the power converter further includes a sampling circuit.

An output terminal of the sampling circuit is connected to the input terminal of the controller.

The controller receives the sampling signal transmitted by the sampling circuit, outputs the turn-off signal to the mechanical switch in response to the sampling signal indicating that the power converter is overloaded, and outputs the turn-off signal to the protection component in response to the sampling signal indicating that the power converter is short-circuited.

In an embodiment, the sampling circuit includes a current sampling unit and a voltage sampling unit.

The current sampling unit is connected in series with a direct-current side of the power converter.

The voltage sampling unit is connected in parallel with the direct-current side of the power converter.

In an embodiment, the current sampling unit is a current sensor or a shunt.

A power conversion system is provided according to the present disclosure. The power conversion system includes a direct-current power supply and a power converter.

The power converter includes the apparatus for protecting the power converter described above.

The direct-current power supply is connected to the apparatus for protecting the power converter.

An apparatus for protecting a power converter and a power conversion system are provided according to embodiments of the present disclosure. In response to the power converter being short-circuited, a protection component is configured to disconnect a connection between the power converter and a direct-current power supply. In response to the power converter being overloaded, a mechanical switch is configured to implement on-load disconnection and arc extinguishing inside the power converter. In this way, a risk of arcing can be avoided in response to a fault occurring in the power converter, and the connection between the power converter and the direct-current power supply is promptly disconnected through the protection component, thereby ensuring the safety of the power conversion system.

Undoubtedly, a product or a method implementing the present disclosure does not necessitate all the above-mentioned advantages at the same time.

### BRIEF DESCRIPTION OF THE DRAWINGS

For more clearly illustrating embodiments of the present disclosure or the technical solutions in the related art, drawings referred to for describing the embodiments or the related art will be briefly described hereinafter. Apparently, the drawings in the following description are only some embodiments of the present disclosure, and for those skilled in the art, other drawings may be obtained based on the drawings provided without any creative efforts.
FIG. 1 is a schematic structural diagram of an apparatus for protecting a power converter according to an embodiment of the present disclosure;
FIG. 2(a) is a schematic structural diagram of an apparatus for protecting a power converter according to another embodiment of the present disclosure;
FIG. 2(b) is a schematic structural diagram of an apparatus for protecting a power converter according to another embodiment of the present disclosure;
FIG. 2(c) is a schematic structural diagram of an apparatus for protecting a power converter according to another embodiment of the present disclosure;
FIG. 3 is a schematic structural diagram of an apparatus for protecting a power converter according to another embodiment of the present disclosure;
FIG. 4 is a schematic structural diagram of an apparatus for protecting a power converter according to another embodiment of the present disclosure;
FIG. 5 is a schematic structural diagram of an apparatus for protecting a power converter according to another embodiment of the present disclosure;
FIG. 6 is a schematic structural diagram of a power converter according to an embodiment of the present disclosure;
FIG. 7(a) is a schematic structural diagram of a power converter according to another embodiment of the present disclosure; and
FIG. 7(b) is a schematic structural diagram of a power converter according to another embodiment of the present disclosure.

### DETAILED DESCRIPTION

The technical solutions in the embodiments of the present disclosure will be described clearly and completely as follows in conjunction with the drawings in the embodiments of the present disclosure. It is apparent that the described embodiments are only a part of the embodiments according to the present disclosure, rather than all of the embodiments. All other embodiments obtained by those skilled in the art based on the embodiments in the present disclosure without any creative effort fall within the protection scope of the present disclosure.

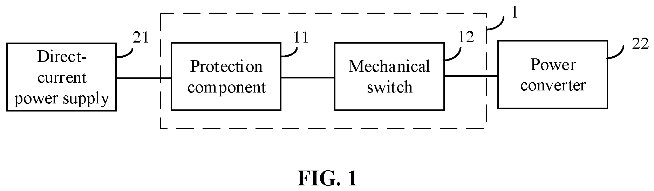

An apparatus for protecting a power converter is provided according to the present disclosure. As shown in FIG. 1, the apparatus 1 for protecting a power converter includes a protection component 11 and a mechanical switch 12.

The protection component 11 is connected to the mechanical switch 12.

A control terminal of the protection component 11 and a control terminal of the mechanical switch 12 receive respective control signals.

In response to the power converter being overloaded, a control signal received by the mechanical switch 12 is a turn-off signal to implement on-load disconnection and arc extinguishing inside the power converter 22.

In response to the power converter being short-circuited, a control signal received by the protection component 11 is a turn-off signal to disconnect a connection between the power converter 22 and a direct-current power supply 21.

To prevent the risk of arcing caused by cutting off a short-circuit fault in response to the fault occurring in the power converter, a mechanical switch with an arc extinguishing function is turned off in response to the power converter being overloaded, to disconnect the connection between the power converter and the direct-current power supply, thereby avoiding the risk of arcing and ensuring the safety of the entire power conversion system. Furthermore, the mechanical switch may implement on-load disconnection in response to disconnecting an overload current. Specifically, in response to an overload fault occurring in the power converter, the mechanical switch receives a turn-off signal. Upon receiving the turn-off signal, the mechanical switch is turned off to disconnect the connection between the power converter and the direct-current power supply.

In response to a short-circuit fault occurring in the power converter, using the mechanical switch to disconnect the connection between the power converter and the direct-current power supply leads to a relatively long protection action time. To shorten the protection action time, the protection component may be employed to disconnect the connection between the power converter and the direct-current power supply, thereby ensuring the safety of the power conversion system. Specifically, in response to the short-circuit fault occurring in the power converter, the protection component receives a turn-off signal. Upon receiving the turn-off signal, the protection component is turned off to disconnect the connection between the power converter and the direct-current power supply.

With the apparatus for protecting the power converter according to the present disclosure, coordinated operation of the mechanical switch and the protection component can address the issue of the relatively long protection action time caused by relying only on the mechanical switch during the short-circuit fault, and avoid the risk of arcing in response to a fault occurring in the power converter, which may burn out the entire power converter and even affect the safety of the entire power conversion system.

In an embodiment, the protection component is a solid-state switch.

The solid-state switch is primarily composed of power electronic devices and features a fast protection action, thereby implementing fast disconnection in response to the short-circuit fault occurring in the power converter. The protection time of the solid-state switch is shorter than that of a fuse. Additionally, the fuse should be timely replaced after a fault, while the solid-state switch is less prone to damage and it is not required to replace the solid-state switch after the short-circuit fault, thereby reducing operation and maintenance costs.

The solid-state switch may include an insulated gate bipolar transistor, IGBT, or a metal-oxide-semiconductor, MOS, field effect transistor.

In an embodiment, the mechanical switch includes a circuit breaker.

The circuit breaker disconnects an overload current to implement on-load disconnection and arc extinguishing inside the power converter, avoiding the risk of arcing. Compared to a contactor, the circuit breaker, without the risk of arcing, ensures the safety of the power converter and the entire power conversion system.

To address the issue that a space occupied by the circuit breaker and the solid-state switch increases significantly as a power density increases, the circuit breaker and the solid-state switch may be integrated inside the power converter to reduce the overall volume.

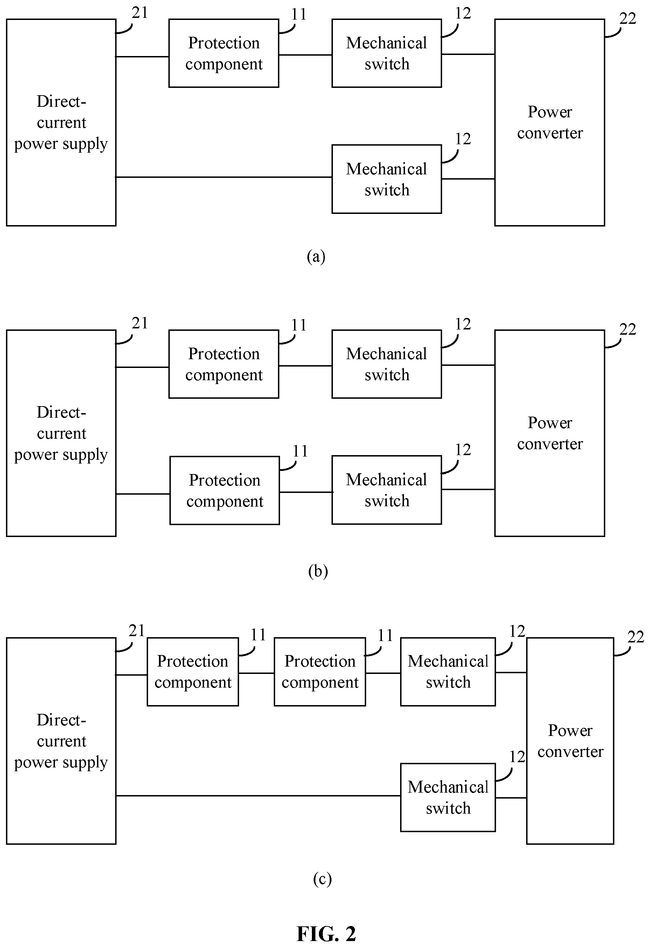

As an optional implementation, in the apparatus for protecting the power converter according to the present disclosure as shown in FIG. 2, the protection component is in a quantity of one or two.

As shown in FIG. 2(a), in response to the protection component being in a quantity of one, the protection component 11 is connected in series with a positive terminal or a negative terminal of the direct-current power supply 21.

In response to the short-circuit fault occurring in the power converter, the protection component is turned off upon receiving the turn-off signal, thereby disconnecting the connection between the direct-current power supply 21 and the power converter 22.

As shown in FIG. 2(b) and FIG. 2(c), in response to the protection component 11 being in a quantity of two, the two protection components 11 are connected in series with the positive terminal and the negative terminal of the direct-current power supply 21 respectively, or a branch formed by the two protection components 11 connected in series is connected in series with the positive terminal or the negative terminal of the direct-current power supply 21.

To enhance the reliability of the apparatus for protecting the power converter and avoid the issue of a single protection component failing to be turned off promptly when faulty, two or more protection components are arranged. In response to the protection component being in the quantity of two, the two protection components are connected in series with the positive terminal and the negative terminal of the direct-current power supply respectively, as shown in FIG. 2(b). Alternatively, the branch formed by the two protection components connected in series is connected in series with either terminal of the direct-current power supply. For example, the branch formed by the two protection components connected in series is connected in series with the positive terminal of the direct-current power supply, or the branch formed by the two protection components connected in series is connected in series with the negative terminal of the direct-current power supply.

In an embodiment, the mechanical switch is in a quantity of two, and the two mechanical switches 12 are connected to a positive terminal and a negative terminal of a direct-current side of the power converter 22 respectively.

In response to the overload fault occurring in the power converter 22, if the two mechanical switches 12 receive the turn-off signal, the two mechanical switches 12 are turned off, thereby disconnecting the connection between the direct-current power supply 21 and the power converter 22.

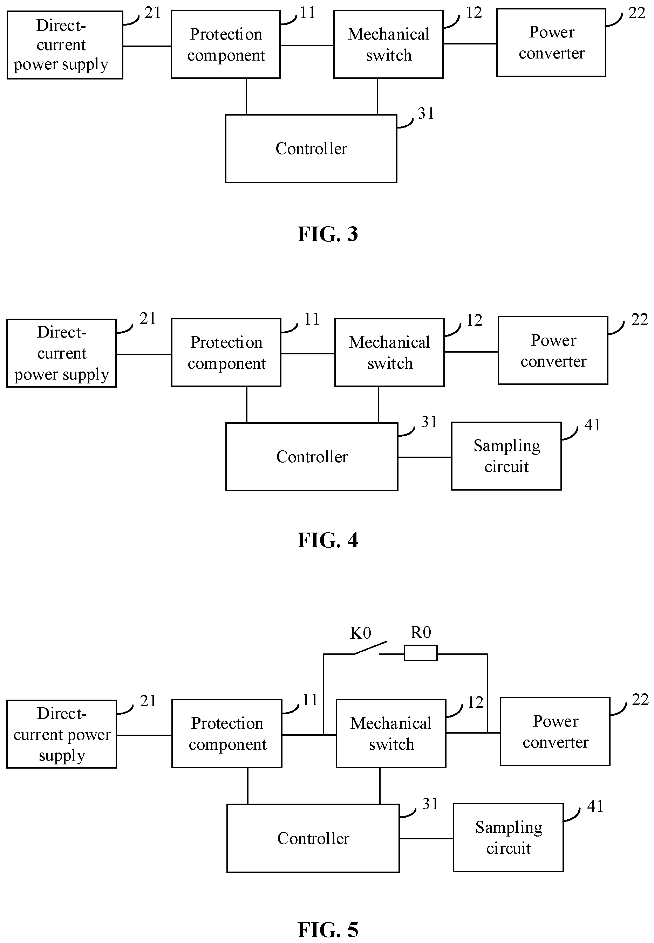

As an optional implementation, as shown in FIG. 3, the apparatus for protecting the power converter according to the present disclosure further includes a controller 31.

Both the protection component 11 and the mechanical switch 12 are controlled by the controller 31.

An input terminal of the controller 31 receives a sampling signal, and an output terminal of the controller 31 is connected to the control terminal of the protection component 11 and the control terminal of the mechanical switch 12.

In response to the mechanical switch being in the quantity of two, the output terminal of the controller is connected to control terminals of the two mechanical switches. In response to the protection component being in the quantity of one, the output terminal of the controller is connected to the control terminal of the protection component. In response to the protection component being in the quantity of two, the output terminal of the controller is connected to control terminals of the two protection components.

The controller may control on/off states of the protection component and the mechanical switch. In response to the power converter being overloaded, the controller outputs a control signal to the mechanical switch. This control signal is a turn-off signal to turn off the mechanical switch, thereby disconnecting the connection between the direct-current power supply and the power converter. In response to the power converter being short-circuited, the controller outputs a control signal to the protection component. This control signal is a turn-off signal to turn off the protection component, thereby disconnecting the connection between the direct-current power supply and the power converter. During normal operation of the power converter, the controller outputs respective control signals to the mechanical switch and the protection component. The control signals are turn-on signals to turn on the mechanical switch and the protection component, thereby establishing the connection between the direct-current power supply and the power converter.

As another optional implementation, as shown in FIG. 4, the apparatus for protecting the power converter according to the present disclosure further includes a sampling circuit 41.

An output terminal of the sampling circuit 41 is connected to the input terminal of the controller 31.

The controller receives the sampling signal transmitted by the sampling circuit, outputs the turn-off signal to the mechanical switch in response to the sampling signal indicating that the power converter is overloaded, and outputs the turn-off signal to the protection component in response to the sampling signal indicating that the power converter is short-circuited. The sampling signal may be a current sampling signal or a combination of a current sampling signal and a voltage sampling signal. The sampling circuit may be integrated inside the power converter along with the mechanical switch and the protection component.

In an embodiment, the sampling circuit includes a current sampling unit.

The current sampling unit is connected in series with a direct-current side of the power converter.

The current sampling unit may be arranged between the mechanical switch and the direct-current side of the power converter to acquire a current of the power converter. In response to the current of the power converter acquired by the current sampling unit being higher than a normal current of the power converter, it indicates that a fault occurs in the power converter. A current acquired by the current sampling unit during a short-circuit fault is higher than that during an overload fault. Therefore, by assessing the magnitude of the current of the power converter acquired by the current sampling unit, it is determined whether a short-circuit fault or an overload fault occurs in the power converter. The controller then controls the mechanical switch or the protection component to be turned off based on the fault type indicated by the current acquired by the current sampling unit.

The current sampling unit may be a current sensor or a shunt.

In an embodiment, the sampling circuit further includes a voltage sampling unit.

The voltage sampling unit is connected in parallel with the direct-current side of the power converter.

The voltage sampling unit acquires a voltage of the power converter. Specifically, the voltage sampling unit is connected in parallel with the direct-current side of the power converter. The voltage sampling unit may also be connected in parallel across two terminals of the direct-current power supply. In response to voltages acquired by two voltage sampling units being identical and non-zero, it indicates that the direct-current power supply and the power converter are conducting. Under this condition that the direct-current power supply and the power converter are conducting, if the voltage of the power converter acquired by the voltage sampling unit is zero, it indicates a short-circuit fault in the power converter. The controller may control the protection component to be turned off, thereby disconnecting the connection between the direct-current power supply and the power converter. Alternatively, in response to the voltage of the power converter acquired by the voltage sampling unit being zero, the voltage may further be combined with the current acquired by the current sampling unit to determine whether a short-circuit fault occurs in the power converter. In response to the acquired current being higher than the normal current, the short-circuit fault is confirmed, and the controller sends a turn-off signal to the protection component to turn off the protection component, thereby disconnecting the connection between the direct-current power supply and the power converter.

As another optional implementation, the apparatus for protecting the power converter according to the present disclosure further includes a soft-start circuit.

The soft-start circuit is connected in parallel across two terminals of the mechanical switch.

The soft-start circuit is configured to be turned on before turning on the mechanical switch.

The soft-start circuit helps prevent inrush current during instant switching of the direct-current power supply. Before turning on the mechanical switch, the soft-start circuit is first turned on. After the soft-start process completes, the mechanical switch is turned on, and the soft-start circuit is then turned off.

In an embodiment, as shown in FIG. 5, the soft-start circuit includes: a soft-start switch KO and a soft-start resistor R0.

The soft-start switch KO is connected in series with the soft-start resistor R0.

In response to the direct-current power supply 21 and the power converter 22 being conducting, the protection component 11 is turned on. Before turning on the mechanical switch 12, the soft-start switch KO is first turned on. Then, the mechanical switch 12 is turned on, followed by turning off the soft-start switch K0, to prevent the inrush current during the instant switching of the direct-current power supply.

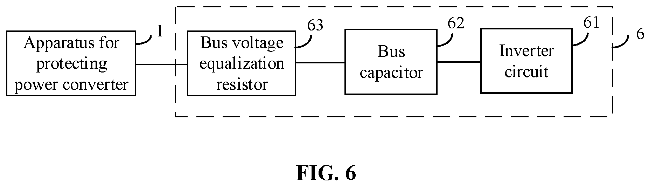

A power converter is further provided according to the present disclosure. As shown in FIG. 6, the power converter includes: a main circuit 6 and an apparatus 1 for protecting a power converter as shown in FIG. 1 to FIG. 5.

The power converter may be an energy storage converter, and the apparatus for protecting the power converter may be an apparatus for protecting an energy storage converter.

In an embodiment, the main circuit includes: an inverter circuit 61.

A direct-current side of the inverter circuit 61 is connected to the apparatus 1 for protecting a power converter.

In an embodiment, the main circuit further includes: a bus capacitor 62.

The bus capacitor is connected between a positive terminal and a negative terminal of the direct-current side of the inverter circuit 61.

In an embodiment, the main circuit further includes: a bus voltage equalization resistor 63.

The bus voltage equalization resistor 63 is connected between the positive terminal and the negative terminal of the direct-current side of the inverter circuit 61.

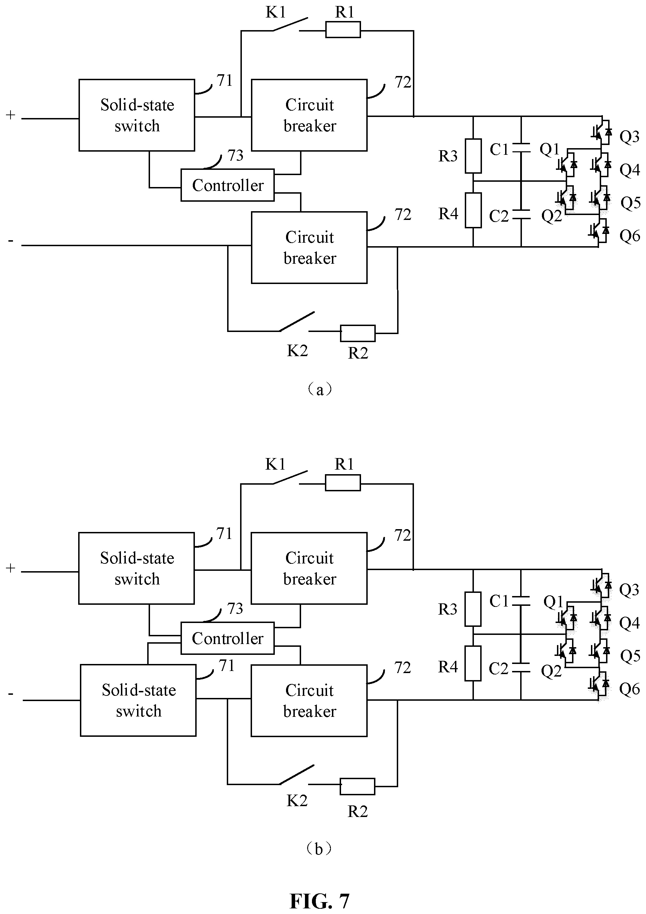

In an optional embodiment, the power converter provided according to the present disclosure, as shown in FIG. 7(a), includes: an apparatus for protecting a power converter and a main circuit. The apparatus for protecting the power converter includes a solid-state switch 71, two circuit breakers 72, a controller 73, soft-start switches K1 and K2, soft-start resistors R1 and R2, and a sampling circuit (not shown in the figure). The main circuit includes bus voltage equalization resistors R3 and R4, bus capacitors C1 and C2, and an inverter circuit. The inverter circuit includes six IGBTs, namely Q1, Q2, Q3, Q4, Q5, and Q6. A connection point of R3 and R4, a connection point of C1 and C2, and a connection point of Q1 and Q2 are connected to each other.

In another optional embodiment, the power converter provided according to the present disclosure, as shown in FIG. 7(b), differs from the power converter shown in FIG. 7(a) in that the apparatus for protecting the power converter includes two solid-state switches 71.

A power conversion system is provided according to the present disclosure. The power conversion system includes a direct-current power supply and a power converter as shown in FIG. 6 and FIG. 7.

The direct-current power supply is connected to a direct-current side of the power converter.

The power converter includes the apparatus for protecting the power converter described above.

The direct-current power supply is connected to the apparatus for protecting the power converter.

If the power converter is an energy storage converter, the power conversion system is an energy storage system, and the direct-current power supply is an energy storage battery.

In FIG. 6, the direct-current power supply is connected to the apparatus 1 for protecting a power converter in the power converter.

In FIG. 7(a), the positive terminal of the direct-current power supply is connected to the solid-state switch 71, and the negative terminal of the direct-current power supply is connected to the circuit breaker 72.

In FIG. 7(b), the positive terminal and the negative terminal of the direct-current power supply are connected to two solid-state switches 71, respectively.

It should be noted that in the present disclosure, relationship terminologies such as "first" and "second" are only used to distinguish one entity or operation from another entity or operation, rather than to necessitate or imply an actual relationship or order between the entities or operations. It should also be noted that the terms "comprise", "include", or any other variants thereof are intended to encompass a non-exclusive inclusion, such that a process, method, article, or device including a series of elements includes not only those elements but also those elements that are not explicitly listed, or the elements that are inherent to such process, method, article, or device. Unless expressively limited, the statement "including a..." does not exclude the case that other similar elements may exist in the process, method, article, or device other than enumerated elements.

The embodiments in the specification are described in a relevant manner. Each of the embodiments is mainly focused on describing its differences from other embodiments, and references may be made among these embodiments with respect to the same or similar portions among these embodiments. In particular, as for the system embodiment, since it is basically same as the method embodiment, the description is relatively simple, and for relevant parts, reference may be made to the description of the method embodiments.

The embodiments of the present disclosure are described above and the embodiments are not intended to limit the present disclosure. Various changes and variations may be made by those skilled in the art to the present disclosure. Any modifications, equivalent substitutions, improvements and the like made within the spirit and the principle of the present disclosure fall within the scope of the claims of the present disclosure.

## Claims

1. An apparatus for protecting a power converter, **characterized by** comprising:
a protection component; and
a mechanical switch, wherein
the protection component is connected to the mechanical switch;
a control terminal of the protection component and a control terminal of the mechanical switch receive respective control signals;
in response to the power converter being overloaded, a control signal received by the mechanical switch is a turn-off signal to implement on-load disconnection and arc extinguishing inside the power converter; and
in response to the power converter being short-circuited, a control signal received by the protection component is a turn-off signal to disconnect a connection between the power converter and a direct-current power supply.

2. The apparatus for protecting the power converter according to claim 1, wherein the protection component is in a quantity of one or two;
in response to the protection component being in a quantity of one, the protection component is connected in series with a positive terminal or a negative terminal of the direct-current power supply; and
in response to the protection component being in a quantity of two, the two protection components are connected in series with the positive terminal and the negative terminal of the direct-current power supply respectively, or a branch formed by the two protection components connected in series is connected in series with the positive terminal or the negative terminal of the direct-current power supply.

3. The apparatus for protecting the power converter according to claim 1, wherein the mechanical switch is in a quantity of two, and the two mechanical switches are connected to a positive terminal and a negative terminal of a direct-current side of the power converter respectively.

4. The apparatus for protecting the power converter according to claim 1, wherein the protection component is a solid-state switch.

5. The apparatus for protecting the power converter according to claim 4, wherein the solid-state switch comprises an insulated gate bipolar transistor, IGBT, or a metal-oxide-semiconductor, MOS, transistor.

6. The apparatus for protecting the power converter according to claim 1, wherein the mechanical switch comprises a circuit breaker.

7. The apparatus for protecting the power converter according to any one of claims 1 to 6, further comprising:
a controller, wherein
the protection component and the mechanical switch are controlled by the controller; and
an input terminal of the controller receives a sampling signal, and an output terminal of the controller is connected to the control terminal of the protection component and the control terminal of the mechanical switch.

8. The apparatus for protecting the power converter according to claim 7, further comprising:
a sampling circuit, wherein
an output terminal of the sampling circuit is connected to the input terminal of the controller; and
the controller receives the sampling signal transmitted by the sampling circuit, outputs the turn-off signal to the mechanical switch in response to the sampling signal indicating that the power converter is overloaded, and outputs the turn-off signal to the protection component in response to the sampling signal indicating that the power converter is short-circuited.

9. The apparatus for protecting the power converter according to claim 8, wherein the sampling circuit comprises:
a current sampling unit and a voltage sampling unit, wherein
the current sampling unit is connected in series with a direct-current side of the power converter; and
the voltage sampling unit is connected in parallel with the direct-current side of the power converter.

10. The apparatus for protecting the power converter according to claim 9, wherein the current sampling unit is a current sensor or a shunt.

11. A power conversion system, **characterized by** comprising:
a direct-current power supply; and
a power converter, wherein
the power converter comprises the apparatus for protecting the power converter according to any one of claims 1 to 10; and
the direct-current power supply is connected to the apparatus for protecting the power converter.
